Europäisches Patentamt

European Patent Office

Office européen des brevets

(11) Publication number: **0 461 490 A1**

# EUROPEAN PATENT APPLICATION

(21) Application number: 91108924.1

(22) Date of filing: 31.05.91

(51) Int. Cl.5: **H02K 26/00, H02K 23/54, H02K 33/16**

(30) Priority: 13.06.90 IT 2136190 U

(43) Date of publication of application:
18.12.91 Bulletin 91/51

(84) Designated Contracting States:
DE ES FR GB

(71) Applicant: ROBOTICA S.R.L.
Via Hensemberger, 9
I-20052 Monza, Milan(IT)

(72) Inventor: Scavino, Mario
Via Alla Cava, 5
I-20050 Lesmo, Milan(IT)

(74) Representative: Luksch, Giorgio, Dr.-Ing. et al
Ing. A. Giambrocono & C. S.r.l. Via Rosolino
Pilo, 19/b
I-20129 Milano(IT)

(54) Torque motor with rotor pole pieces.

(57) A torque motor consisting of a stator composed of a ring (1) of ferromagnetic material about which conducting turns (2) are wound, and a rotor (4) composed of at least one permanent magnet located within the stator and free to rotate, wherein pole elements (10, 10'; 10A, 10'A) of ferromagnetic material are provided at the rotor ends in such a manner as to at least partly embrace the stator (1, 1A).

Fig. 2

Rank Xerox (UK) Business Services

EP 0 461 490 A1

This invention relates to a torque motor. Torque motors, which are well known, are designed to provide large torques through small angular movements.

In such motors the stator consists of a usually square cross-sectional ring of ferromagnetic material (such as soft iron) about which a series of turns forming one or more windings are wound.

The rotor consists of a permanent magnet pivoted at its centre and free to rotate within said ring.

By suitably powering the stator winding, the rotor is made to undergo an angular movement through a small angle, for example $90°$ or $120°$.

The large torque which these motors generate and the small movement which they undergo enable the motor to directly operate a load (such as a butterfly valve) without the need for intermediate gears.

Because of the manner in which they are constructed, these motors utilize the electromagnetic interaction between the magnet and only that part of the turns close to the magnet, on the inside of the ring.

The only purpose of the remaining part of the turns is to electrically close the circuit, with consequent passage of current.

The result is that those parts of the turns on the outer, lower and upper side of the ring, through which current passes, dissipate energy by the joule effect without generating any useful work.

An object of the invention is to cause these parts of the turn to cooperate in the generation of the force which gives rise to the movement of the permanent magnet.

A further object is to generate a larger torque for the same number of turns, so increasing the motor performance.

These and further objects which will be apparent from the following detailed description are attained according to the present invention by a torque motor of the aforespecified type wherein pole elements of ferromagnetic material are mounted on the poles of the permanent magnet or magnets in such a manner as to at least partly embrace the ring.

These pole elements cause the magnetic flux leaving the pole of the magnet to intercept the entire turn, so creating a total force which is the sum of the forces acting on each part of the turn.

The present invention will be more apparent from the description given hereinafter by way of non-limiting example with reference to the accompanying drawings, in which:

Figure 1 is a schematic plan view of a conventional torque motor;

Figure 2 is a plan view of the motor of the invention;

Figure 3 is a partial section through the motor of the invention on the line 3 - 3 of Figure 2;

Figure 4 is a diametrical section through a modified embodiment.

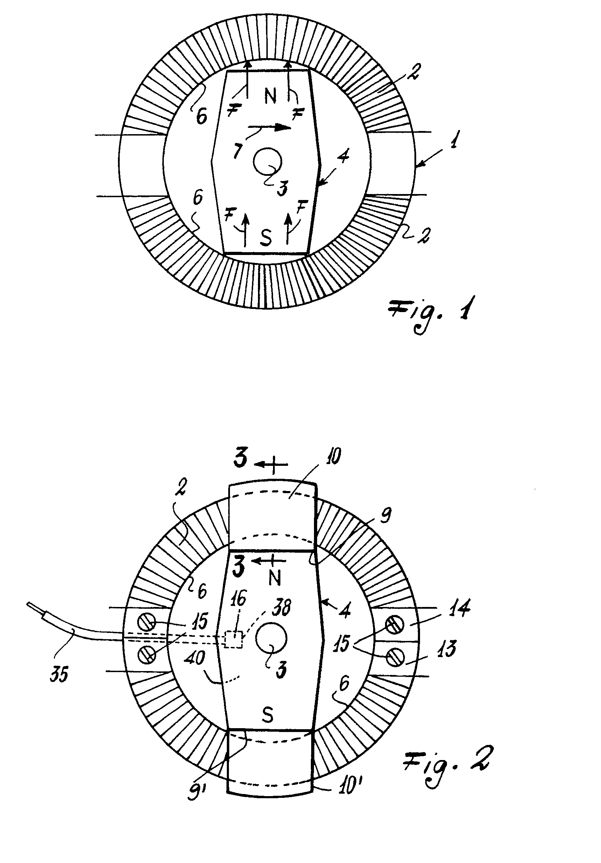

With reference to Figure 1, a torque motor consists of a ring 1 of ferromagnetic material (advantageously soft iron) about which a series of turns 2 of conducting wire are wound.

Within the ring there is pivoted at 3 a rotor formed of a permanent magnet 4 having a length slightly less than the inner diameter of the ring.

The flux F generated by the permanent magnet interacts with the current passing through the inner side 6 of the turns 2 to produce a force 7 able to move the permanent magnet.

Those parts of the turn which are horizontal (when the motor axis is vertical) do not generate any force as the current which passes through them and the flux generated by the magnet are parallel to each other. That part of the turn opposite the part 6, ie the outer side of the turns, also provides no contribution to the force.

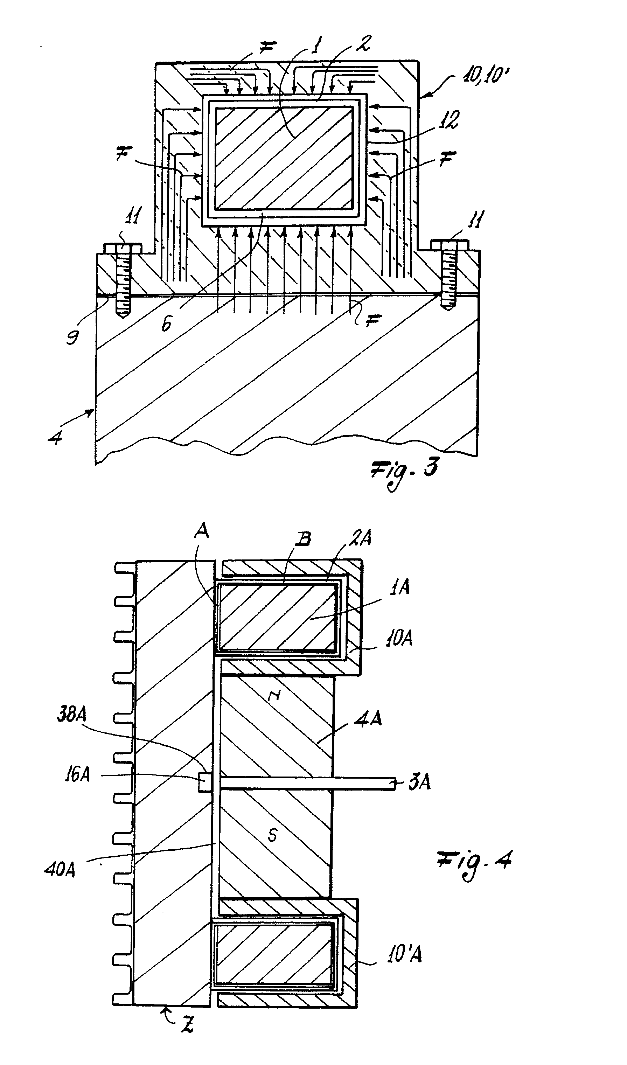

With reference to Figures 2 and 3, at the ends 9 of the rotor 4 there are provided two pole elements in the form of annular appendices 10, 10', advantageously of ferromagnetic material, which are fixed to the rotor by usual fixing means, such as screws 11.

The annular elements 10, 10' delimit a hole 12 substantially conjugate with the cross-section of the ring so that the distance between said elements and the turns wound on it is the minimum possible, while avoiding mutual interference.

Basically, these pole elements surround the stator formed by the ring and the turns.

In this case the magnet 4 and the appendices 10, 10' generate a flux F which cuts the entire turn.

To make the unit simple to construct, the ring is formed of two half-rings 13, 14 on which the winding turns are wound.

The two pole elements 10, 10' are then mounted over the two half-rings 13, 14 which are then combined to form a complete ring, which is fixed together by usual screws 15.

The permanent magnet 4 is then inserted into the ring 1 and the pole elements 10, 10' are fixed to the two ends 9, 9' of the rotor (permanent magnet) by screws 11.

The annular appendices can however be fixed to the magnet by other means, such as by glue, by an insertion fit etc.

In addition it is not necessary for the pole elements 10, 10' to completely embrace the ring and its turns, ie open instead of closed pole elements can be provided.

An embodiment which in certain respects is more advantageous than that described heretofore is shown schematically in section in Figure 4, in which equal or corresponding parts are indicated by the same reference numerals. In this embodiment the ring is continuous (ie is not formed of two half-rings 13, 14 as in the preceding embodiment). This has the following advantages: a) it is not necessary to lap the mutually contacting faces of the half-rings to provide the required proper contact; b) the two or more stator windings can be produced with the same continuous winding machine; c) the pole elements 10A, 10'A (which in this case are open on one side as indicated on the drawing) are mounted on the rotor magnet without the danger of scraping the insulation from the wires of the stator winding or windings 2A; d) one face of the ring 1A can be arranged in contact with a radiating member Z to dissipate the heat generate by the winding or windings.

With this embodiment the torque effect generated by that side of the turns in contact with the radiating member Z is lost, but this loss can be limited by using a ring 1A of rectangular cross-section with the side A substantially shorter than the side B.

A sensor can be associated with the torque motor to sense the position of the rotor relative to a fixed or zero position, the motor being operated on the basis of the data obtained by said sensor and fed to a control unit (of any known type) controlling the motor operation.

Advantageously, a Hall effect transistor of known type 16, 16A is associated with said motor. This transistor generates analog signals according to the direction of the lines of force of the magnetic field generated by the permanent magnet, ie according to the position in which the magnet 4 or 4A is located relative to a suitably chosen zero position. These signals are then fed via a usual electrical connection 35 visible in Figure 2 to a known control unit (not shown), advantageously a microprocessor, which on the basis of these signals and usual known comparison algorithms calculates the position of the rotor within the motor and operates this latter in known manner.

For this purpose the transistor 16, 16A is located in a fixed position (for example in a seat 38, 38A in the radiating heat dissipator member Z) on the diametrical plane of the magnet in correspondence with one face 40, 40A of the magnet.

This results in a very economical position sensor, as the motor magnet is used as the transistor exciter.

## Claims

1. A torque motor consisting of a stator composed of a ring (1) of ferromagnetic material about which conducting turns (2) are wound, and a rotor (4) composed of at least one permanent magnet located within the stator and free to rotate, characterised in that pole elements (10, 10'; 10A, 10'A) of ferromagnetic material are provided at the rotor ends in such a manner as to at least partly embrace the stator (1, 1A).

2. A torque motor as claimed in the preceding claim, characterised in that said pole elements (10, 10') consist of a body delimiting an aperture conjugate with the cross-section of the stator, but in such a manner that the rotor together with said elements can rotate freely.

3. A torque motor as claimed in the preceding claim, characterised in that said pole elements (10, 10'; 10A, 10'A) consist of parts which are separate from the rotor and are joined to it by usual means (11).

4. A torque motor as claimed in the preceding claim, characterised in that the stator (1) consists of two separate half-rings (13) and (14) which are joined together by usual means or alternatively is formed in one piece (1A).

5. A torque motor as claimed in claim 1, characterised in that the pole elements when viewed in cross-section are in the form of either a closed ring (10, 10') or an open ring (10A, 10'A).

6. A torque motor as claimed in claim 1, characterised in that the pole elements (10A, 10'A) leave one side of the stator winding or windings free, on this side there being provided a radiating member (Z).

7. A torque motor as claimed in claim 1, characterised by comprising sensor means (16; 16A) arranged to sense the position of the rotor relative to a fixed or zero position, the motor being operated on the basis of the data obtained by said sensor means (16; 16') and fed to usual control members for controlling the motor operation.

8. A torque motor as claimed in claim 7, characterised in that the sensor means are a Hall effect transistor located in a fixed position on a diametrical plane of the rotor in correspondence with one face (40; 40') of the rotor (4, 4').

Fig. 1

Fig. 2

Fig. 3

Fig. 4

5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 11, no. 104 (E-494)(2551) 02 April 1987, & JP-A-61 251465 (HITACHI LTD) 08 November 1986, * the whole document * | 1-3,5,6 | H 02 K 26/00<br>H 02 K 23/54<br>H 02 K 33/16 |
| A | MACHINE DESIGN. vol. 61, no. 25, 07 December 1989, CLEVELAND US pages 97 - 100; W.A.Fleisher: "Brushless motors for limited rotation" | 1,4 | |
| A | DE-B-2 039 428 (STANDARD ELEKTRIK LORENZ AG) * column 3, lines 15 - 55; figure 1 * | 1,4,7 | |
| A | DE-B-1 263 157 (LLOYD DYNAMOWERKE GMBH) * column 5, lines 49 - 57; figure 6 * | 6 | |
| A | DE-A-2 529 471 (CANON) * figure 5 * | 1 | |

| | | | TECHNICAL FIELDS SEARCHED (Int. Cl.5) |
|---|---|---|---|
| | | | H 02 K |

The present search report has been drawn up for all claims

| Place of search | Date of completion of search | Examiner |
|---|---|---|
| Berlin | 16 September 91 | LEOUFFRE M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document